# EUROPÄISCHE PATENTSCHRIFT

(11) **EP 4 565 851 B1**
(45) Veröffentlichungstag und Bekanntmachung des Hinweises auf die Patenterteilung: **19.11.2025**
(21) Anmeldenummer: 23748461.3
(22) Anmeldetag: 21.07.2023
(51) Int. Cl.: G01G 21/23, G01G 21/28

(54) **WAAGE MIT EVAKUIERBAREM GEHÄUSE**
SCALE WITH EVACUABLE HOUSING
BALANCE AVEC BOÎTIER ÉVACUABLE

(30) Priorität: 02.08.2022 DE 202022104394 U
(43) Veröffentlichungstag der Anmeldung: 11.06.2025
(73) Patentinhaber: Sartorius Lab Instruments GmbH & Co. KG, 37079 Göttingen (DE)
(72) Erfinder: HILBRUNNER, Falko, 98693 Ilmenau (DE); FRÖHLICH, Thomas, 98693 Ilmenau (DE); SCHREIBER, Mario, 07607 Gösen (DE); SCHULZ, Tim, 98617 Untermaßfeld (DE); FEHLING, Thomas, 37218 Witzenhausen (DE)
(74) Vertreter: Novagraaf International SA
(86) Internationale Anmeldenummer: PCT/EP2023/070288
(87) Internationale Veröffentlichungsnummer: WO 2024/028125

(56) Entgegenhaltungen:
- US-A1- 2013 333 957

## Beschreibung

### Gebiet der Erfindung

Die Erfindung betrifft eine Waage, umfassend
ein evakuierbares Gehäuse mit einem Boden, Seitenwänden und einer Decke sowie eine in dem Gehäuse angeordnete Wägevorrichtung mit einem Wägegutträger, einem Wägesystem und einem Wägesensor,
wobei das Wägesystem eine gehäusefeste Basis und einen mit dem Wägegutträger verbundenen Lastaufnehmer aufweist, der einerseits über eine an der Basis angelenkte Lenkeranordnung vertikalbeweglich mit der Basis und andererseits über eine Hebelanordnung kraftübertragend mit dem basisfesten Wägesensor gekoppelt ist.

### Stand der Technik

Präzisionswaagen, wie sie insbesondere als sogenannte Massekomparatoren zur vergleichenden Gewichtsmessung zu Kalibrier- bzw. Eichzwecken Einsatz finden, sind dem Fachmann hinlänglich bekannt. Die tolerierbaren Messunsicherheiten für solche Präzisionswaagen sind extrem gering und streng standardisiert (z.B. OIML R111.1). Zur entsprechenden Reduzierung solcher Messunsicherheiten ist es erforderlich, potentielle äußere Störgrößen möglichst vollständig zu unterdrücken. Eine dieser Störgrößen ist die Dichte der das Prüfgewicht umgebenden Luft, da jedes Gewichtsstück eine von der Dichte seiner Umgebungsluft abhängige Auftriebskraft erfährt, welche seiner Gewichtskraft entgegenwirkt. Es ist daher bekannt, Gewichtsmessungen, die höchsten Präzisionsstandards genügen sollen, unter Vakuumbedingungen durchzuführen. Hierzu wird die eigentliche Wägevorrichtung (und selbstverständlich mit ihr das zu verwiegende Gewichtsstück) in einem luftdichten Gehäuse angeordnet, welches vor der Messung evakuiert wird. Der Einfluss des o.g. Auftriebs kann damit vollständig eliminiert werden.

Allerdings sind mit der Evakuierung des Gehäuses zusätzliche Probleme verbunden. Je nach Evakuierungsgrad, d.h. je nach dem im Gehäuse gegenüber der Waagenumgebung herrschenden Unterdruck, können erhebliche Kräfte auf das Gehäuse einwirken. Diese können zu mechanischen Spannungen und Verziehungen führen, die sich wiederum auf die filigranen Elemente des mit seiner Basis am Gehäuse fixierten Wägesystems der eigentlichen Wägevorrichtung übertragen können. Im Ergebnis können dadurch zusätzliche Messunsicherheiten entstehen.

Unter einem Wägesystem sei im Kontext der vorliegenden Beschreibung ein komplexes Werk aus Hebeln und Lenkern verstanden, mittels dessen ein Lastaufnehmer, in welchen während des Wägevorgangs die Gewichtskraft des Prüfgewichts eingeleitet wird, einerseits vertikal auslenkbar mit der gehäusefesten Basis des Wägesystems und andererseits mit dem basisfesten Wägesensor gekoppelt ist. Bei Präzisionswaagen, die üblicherweise nach dem Prinzip der elektromagnetischen Kompensation arbeiten (EMK-Waagen), handelt es sich bei besagtem Wägesensor typischerweise um eine Tauchspulenanordnung, wobei der Spulenstrom, der zur Kompensation der von der Gewichtskrafteinwirkung auf den Lastaufnehmer verursachten Auslenkung erforderlich ist, als Maß für die einwirkende Gewichtskraft dient. Die spezielle Natur des Wägesensors spielt im Kontext der vorliegenden Erfindung keine Rolle. In jedem Fall jedoch sind derartige Wägesysteme mit ihren lang erstreckten, höchst filigranen und teils gefalteten Hebel-, Lenker- und Gelenkanordnungen höchst anfällig für mechanische Spannungen und Verziehungen.

Ein weiteres mit der Evakuierung des Gehäuses verbundenes Problem ist die mit der Absenkung des Luftdrucks einhergehende Temperaturabsenkung. Diese kann zu wärmeausdehnungsbedingten Änderungen von Abmessungen im Wägesystem führen, die ihrerseits weitere Messunsicherheiten erzeugen.

Aus der DE 10 2011 000 429 A1 bzw. aus deren englischsprachigem Äquivalent US 2013/0333957 A1 ist eine Wägekabine bekannt mit einer als eine durchgehende, ebene Platte ausgebildeten Arbeitsfläche und einer integrierten Waage, die eine die Arbeitsfläche in etwa bündig durchsetzende Waagschale sowie mindestens eine in die Arbeitsfläche integrierte Bedienfläche aufweist. Die Wägekabine ist mit einer Absaugvorrichtung versehen, mit der durch toxische Substanzen kontaminierte Luft abgesaugt und durch nachströmende, saubere Luft ersetzt werden kann. Dies ermöglicht es, in der Wägekabine auch mit toxischen bzw. gesundheitsgefährdenden Substanzen zu arbeiten.

### Aufgabenstellung

Es ist die Aufgabe der vorliegenden Erfindung, eine Waage mit evakuierbarem Gehäuse derart weiterzubilden, dass die erläuterten, mit der Evakuierung im Zusammenhang stehenden Messunsicherheiten verringert werden.

### Darlegung der Erfindung

Diese Aufgabe wird in Verbindung mit den Merkmalen des Oberbegriffs von Anspruch 1 dadurch gelöst, dass vom Zentrum des Bodens des Gehäuses eine vertikale Säule aufragt, auf deren freiem Ende die Basis des Wägesystems fixiert ist.

Bevorzugte Ausführungsformen der Erfindung sind Gegenstand der abhängigen Schutzansprüche.

Klassischerweise wird die gehäusefeste Anbindung des Wägesystems dadurch erreicht, dass seine Basis unmittelbar auf der Bodenfläche des Gehäuses fixiert wird. Hiervon nimmt die vorliegende Erfindung Abstand. Vielmehr erfolgt die Anbindung mittelbar über eine stabile Säule, die vom Zentrum des Gehäusebodens aufragt. Verziehungen des Gehäusebodens, die sich insbesondere in einer Wölbung desselben äußern, werden mittels der Säule in eine rein vertikale Bewegung umgelenkt. Das Wägesystem, dessen Basis auf der Spitze der Säule fixiert ist, erfährt also ebenfalls nur eine vertikale Versetzung, die für seine sämtlichen Komponenten gleich wirkt. Insofern werden interne Spannungen im Wägesystem, die zu den besagten Messunsicherheiten führen können, ausgeschlossen. Der Fachmann wird dabei erkennen, dass es unerheblich ist, ob eine (plattenartige) Basis des Wägesystems unmittelbar auf der Säulenspitze fixiert oder ob das freie Ende der Säule eine deren Außenumfang überragende Plattform trägt, auf welcher die Basis des Wägesystems fixiert ist. Entscheidend ist die Reduzierung des (mittelbaren) Kontaktes der Wägesystembasis mit dem Gehäuseboden auf eine durch den Querschnitt der Säule vorgegebene Minimalfläche, innerhalb derer keine Spannungen in der Horizontalebene, sondern lediglich unschädliche Vertikalbewegungen übertragen werden können.

Dieser Ansatz funktioniert besonders gut, wenn der Boden des Gehäuses kreisscheibenförmig ausgebildet und ringförmig von den Seitenwänden umstanden ist. Eine solche Rotationssymmetrie des Bodens stellt sicher, dass eine unterdruckbedingte Aufwölbung ausschließlich zu einem vertikalen Anheben der Säule (und damit des Wägesystems) führt und eventuelle seitliche Verkippungen ausgeschlossen sind.

Ein in dieselbe Richtung weisender Ansatz sieht vor, dass der Boden und die Seitenwände des Gehäuses materialeinheitlich einstückig ausgebildet sind. Insbesondere können Boden und Seitenwände des Gehäuses rotationssymmetrisch aus einem Materialblock, insbesondere einem Metallblock herausgearbeitet sein, vorzugsweise mittels Fräsens, Bohrens und/oder Elektroerodierens. Alternativ sind jedoch auch additive Fertigungstechniken denkbar. In jedem Fall ist es das Ziel dieses Ansatzes, jegliche beim Evakuieren auftretende Verformungen derart rotationssymmetrisch zu gestalten, dass sie sämtlich in eine reine Vertikalbewegung der erfindungsgemäßen Säule umgelenkt werden.

Eine unvermeidbare Asymmetrie wird allerdings durch das Wägesystem selbst eingebracht, welches unmöglich rotationssymmetrisch gefertigt werden kann. Bei einer bevorzugten Ausführungsform der Erfindung ist daher vorgesehen, dass das Wägesystem zumindest im Bereich des Lastaufnehmers über den Außenumfang der Säule und - soweit vorhanden - über den Rand der das Wägesystem tragenden Trägerplatte übersteht und der als eine Pendelschale ausgebildete Wägegutträger hängend unterhalb des Lastaufnehmers an diesem angelenkt ist. Mit anderen Worten wird die eigentliche Wägevorrichtung also nach dem Konzept der unterschaligen Waage ausgebildet. Dadurch kann bei geeignet gelenkiger Kopplung des Wägegutträgers an den Lastaufnehmer eine stets exakt vertikale Einleitung der zu messenden Gewichtskraft in den Lastaufnehmer sichergestellt werden. Zudem bietet dieser Ansatz eine optimale Nutzung des durch die erfindungsgemäße Säule entstandenen Freiraums im Gehäuse unterhalb des Wägesystems, der dadurch zum Wägeraum wird.

Bei Präzisionswaagen mit evakuierbarem Gehäuse ist der mit einer Wiederbelüftung und erneuten Evakuierung verbundene Wechsel von Prüfgewichten stets mit erheblichem zeitlichem Aufwand verbunden. Es ist daher bekannt, innerhalb des evakuierbaren Gehäuses ein Prüfgewichtsmagazin mit einer automatischen Lastwechseleinrichtung vorzusehen, die es erlaubt, mehrere Prüfgewichte aus dem Magazin nacheinander zu verwiegen, ohne zwischenzeitlich eine Wiederbelüftung und erneute Evakuierung des Gehäuses vornehmen zu müssen. Im Kontext der vorliegenden Erfindung wird es in diesem Zusammenhang als besonders vorteilhaft angesehen, wenn an der Säule ein konzentrisch zu dieser angeordneter Drehteller mit einem Prüfgewichtsmagazin drehbeweglich gelagert ist. Der Drehteller kann über seinen Umfang verteilt mehrere Positionen zur Lagerung von Prüfgewichten aufweisen. Zur Bestückung des Wägegutträgers kann dann das aktuell zu verwiegende Prüfgewicht zum Wägegutträger gedreht und mittels einer geeignet ausgebildeten Lastübergabevorrichtung vom Magazin auf den Wägegutträger übergeben werden. Eine solche Übergabe kann insbesondere mit einer Vertikalverstellung des Drehtellers und/oder an ihm angeordneter Elemente erfolgen. Die spezielle Konstruktion einer solchen Lastübergabeeinrichtung spielt im Kontext der vorliegenden Erfindung keine Rolle. Der Fachmann wird jedoch verstehen, dass im Kontext von Präzisionsmessungen jegliche Bewegungen bzw. Bewegbarkeiten minimiert und Abstände und Spaltmaße daher so klein wie möglich, dimensioniert werden sollten, sodass eine Veränderung der relativen Höhenlage zwischen Wägegutträger und Drehteller aufgrund von Verziehungen des Gehäuses ungünstig wären. Derartige Probleme sind aufgrund der vorliegenden Erfindung und ihrer hier beschriebenen Weiterbildung jedoch nicht zu befürchten. Wie eingangs erläutert, werden erfindungsgemäß sämtliche Gehäuseverziehungen in eine vertikale Bewegung der Säule umgelenkt. Der an der Säule selbst gelagerte Drehteller wird daher mit dieser angehoben bzw. abgesenkt und erfährt somit keinerlei Änderung seiner relativen Höhenlage zu dem auf der Spitze derselben Säule fixierten Wägesystem bzw. dem höhenfest mit jenem verbundenen Wägegutträger.

Unter praktisch-konstruktiven Erwägungen kann es jedoch genauso günstig oder sogar noch günstiger sein, den Drehteller außen, d.h. an der Innenwand des Gehäuses zu lagern. Dies kann zwar zu einer vertikalen Relativverschiebung von Drehteller und Wägegutträger beim Evakuieren des Gehäuses führen; eine stabile Lagerung des Drehtellers ist aber radial weiter außen konstruktiv wesentlich leichter umzusetzen als radial weiter innen, nämlich an der Säule. Der Fachmann hat daher im Einzelfall die tatsächlich realisierten Suboptimalitäten gegeneinander abzuwägen.

Allgemein wird es als vorteilhaft angesehen, den zu evakuierenden Raum des Gehäuses möglichst zu minimieren. Bei einer besonders bevorzugten Ausführungsform der Erfindung ist daher vorgesehen, dass die Seitenwände des Gehäuses die Säule nicht oder zumindest um weniger als die Höhe des Wägesystems überragen und das Wägesystem in eine korrespondierende Ausnehmung der Decke des Gehäuses eingepasst ist. Mit anderen Worten wird also die oben als bevorzugt erläuterte Rotationssymmetrie des Gehäuses im Bereich der Gehäusedecke gezielt gebrochen. Dies ist jedoch unschädlich. In diesem Bereich liegt aufgrund der nichtrotationssymmetrischen Form des Wägesystems selbst ohnehin bereits ein Symmetriebruch vor, an den sich die Asymmetrie der Gehäusedecke lediglich anpasst. Zudem steht die Gehäusedecke in keinem Kontakt mit dem Wägesystem, sodass eventuelle Verziehungen der Decke keinen negativen Einfluss auf das Wägesystem und damit das Messergebnis haben können.

Das, wie oben bereits erwähnt, vorzugsweise aus Metall gefertigte Gehäuse ist in seiner besonders bevorzugten Ausführungsform dickwandig ausgeführt. Dies dient nicht nur einer Maximierung der mechanischen Stabilität, sondern auch der Maximierung der Wärmekapazität und der Wärmeleitung des Gehäuses, die ihrerseits eine Verringerung von Temperaturunterschieden innerhalb des Gehäuses bei der Evakuierung bewirkt. Nach der Evakuierung wird sich daher schneller als bei dünnwandigen Gehäusen eine stabile Temperatur einstellen, die für die Messungen erforderlich ist. Entsprechend zügiger können Messserien hintereinander durchgeführt werden.

Die Oberflächen des Gehäuses sind vorzugsweise unlackiert und poliert. Im Gehäuseinneren wird dadurch ein Abdampfen von Farbstoffen unter Vakuum und daher eine entsprechende Verschmutzung der Prüfgewichte vermieden. Am Gehäuseäußeren kann auf diese Weise die Reflektivität maximiert werden, wodurch von außen auf das Gehäuse einwirkende elektromagnetische Strahlung weniger bzw. langsamer zu Temperaturänderungen im Gehäuseinneren führt.

Weitere Einzelheiten und Vorteile der Erfindung ergeben sich aus der nachfolgenden speziellen Beschreibung und den Zeichnungen.

### Kurzbeschreibung der Zeichnung

Es zeigt:

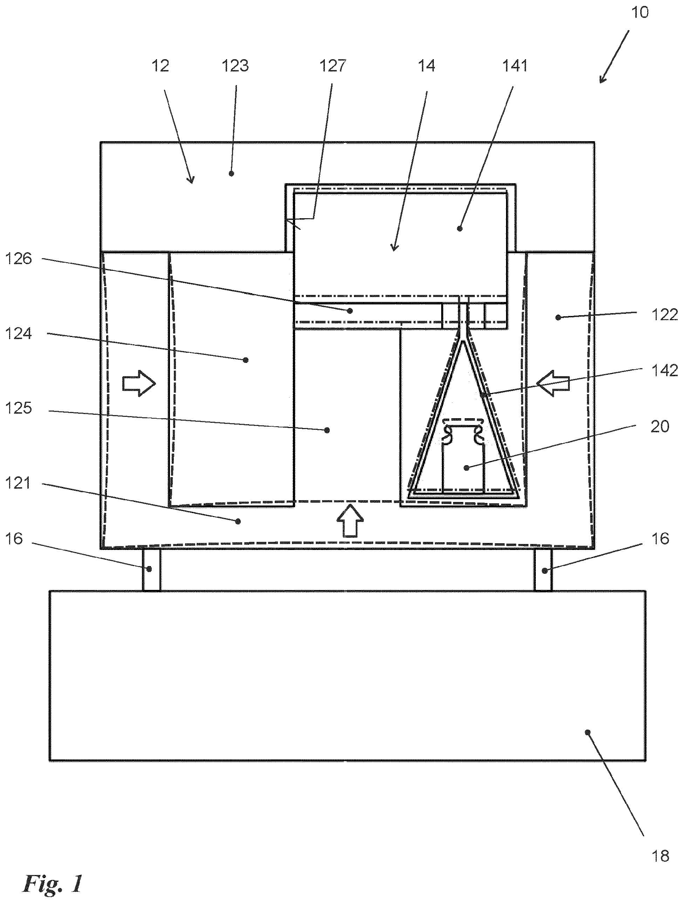

- Figur 1:: eine schematische Darstellung einer erfindungsgemäßen Waage.

### Beschreibung bevorzugter Ausführungsformen

Figur 1 zeigt in stark schematisierter Darstellung eine erfindungsgemäße Waage 10. Die dargestellte Waage 10 umfasst ein evakuierbares Gehäuse 12 und eine in dem Gehäuse 12 angeordnete Wägevorrichtung 14. In der gezeigten Ausführungsform ist die Waage 10 über Stützen 16 auf einem schwingungsisolierten Fundament 18 festgelegt. Die spezielle Art der Festlegung der Waage 10 auf dem Fundament 18 sowie dessen Schwingungsisolierung spielt im Kontext der vorliegenden Erfindung keine Rolle.

Das Gehäuse 12 besteht im Wesentlichen aus einem Boden 121, der insbesondere kreisscheibenförmig ausgebildet sein kann. Rings um den Rand des Bodens 121 erheben sich Seitenwände 122, die bei der gezeigten Ausführungsform einstückig und materialeinheitlich mit dem Boden 121 verbunden sind. Das Gehäuse 12 ist mittels einer als abnehmbarer Deckel ausgebildeten Decke 123 versehen, die luftdicht auf den freien Kanten der Seitenwände 122 fixierbar ist. Auf diese Weise entsteht ein allseitig von Wandungen umgebener Hohlraum, der auch als Wägeraum 124 bezeichnet werden kann.

Über nicht dargestellte Evakuierungsmittel kann der Wägeraum 124 evakuiert werden. Der Fachmann wird verstehen, dass eine absolute Evakuierung praktisch nicht möglich ist und wird daher erkennen, dass mit Evakuieren hier die Herstellung eines erheblichen Unterdrucks im Wägeraum gegenüber der Gehäuseumgebung gemeint ist.

Erfindungsgemäß erhebt sich im Zentrum des Bodens 121 eine vertikale Säule 125 in den Wägeraum 124. Die Säule 125 ist bei der dargestellten Ausführungsform einstückig und materialeinheitlich mit dem Boden 121 ausgebildet.

Auf der Spitze der Säule 125, d.h. auf ihrem freien Ende, ist eine Trägerplatte 126 fixiert, die einseitig über den Außenumfang der Säule 125 hinaus- und in den Wägeraum 124 hineinragt.

Auf der Trägerplatte 126 ist das Wägesystem 141 der Wägevorrichtung 14, insbesondere dessen Basis, fixiert. An dem nicht gesondert dargestellten Lastaufnehmer des Wägesystems 141 ist ein als Pendelschale ausgebildeter Wägegutträger 142 angelenkt. Die gelenkige Ankopplung des Wägegutträgers 142 am Lastaufnehmer durchsetzt bei der dargestellten Ausführungsform eine Ausnehmung in der Trägerplatte 126. Der Wägegutträger 142 hängt frei pendelnd neben der Säule 125 im Wägeraum 124. Auf der Schale des Wägegutträgers 124 ist ein Prüfgewicht 20 dargestellt.

Durch den bei der Evakuierung des Wägeraums 124 entstehenden Unterdruck werden erhebliche, auf die Wandungen des Gehäuses 12 einwirkende Kräfte erzeugt. Diese können, wie in Figur 1 durch gestrichelte Linien in erheblich übertriebenem Maße dargestellt, zu einer temporären, elastischen Verformung der Gehäusewandungen führen. Insbesondere im Bereich des kreisscheibenförmigen Bodens 121 erfolgt eine solche Verformung im Wesentlichen als rotationssymmetrische Aufwölbung. Dies führt zu einer über die Gesamtheit des Bodens uneinheitlichen Verteilung von Hebungen und Schrägungen, die zu einer Verziehung eines flächig auf dem Boden fixierten Wägesystems führen würden. Im Zentrum des Bodens 121 wirkt sich diese Aufwölbung allerdings lediglich als vertikale Anhebung auf. Entsprechend bewegt sich die im Zentrum des Bodens 121 angeordnete Säule 125 in rein vertikaler Richtung. Entsprechend wird auch die auf der Säule 125 fixierte Wägevorrichtung 14 rein vertikal verschoben. Diese Vertikalverschiebung ist in Figur 1 mit strichpunktierten Linien angedeutet. Sie betrifft die gesamte Wägevorrichtung 14, einschließlich deren Wägesystems 141, ihres Wägegutträgers 124 (samt Prüfgewicht 20) sowie ihres in Figur 1 nicht gesondert dargestellten Wägesensors. All diese Elemente führen also bei der Evakuierung keine Relativbewegung zueinander aus, sodass die durch die Evakuierung entstehende Verformung des Gehäuses 12 keinerlei Einfluss auf das Messergebnis der Wägevorrichtung 14 hat.

Bei der dargestellten Ausführungsform erstrecken sich zur Minimierung des Wägeraumvolumens die Seitenwände 122 nicht bis über die Oberkante des Wägesystems 141 hinaus. Vielmehr weist die Decke 123 des Gehäuses 12 im Bereich des Wägesystems 141 eine zur Form des Wägesystems 141 korrespondierende Ausnehmung 127 auf, in welche das Wägesystem 141 berührungslos hineinragt.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere kann der Fachmann innerhalb des Wägeraums 124 weitere Komponenten vorsehen. Insbesondere können ein Prüfgewichtsmagazin und eine automatisierte Lastwechseleinrichtung innerhalb des Wägeraums 124 angeordnet sein, beispielsweise in Form eines an der Säule 125 gelagerten Drehtellers. Diese Elemente sind der Übersichtlichkeit halber jedoch in Figur 1 nicht dargestellt.

### Bezugszeichenliste

- 10: Waage
- 12: Gehäuse
- 121: Boden
- 122: Seitenwand
- 123: Decke
- 124: Wägeraum
- 125: Säule
- 126: Trägerplatte
- 127: Ausnehmung
- 14: Wägevorrichtung
- 141: Wägesystem
- 142: Wägegutträger
- 16: Stütze
- 18: Fundament
- 20: Prüfgewicht

## Patentansprüche

1. Waage (10), umfassend
ein evakuierbares Gehäuse (12) mit einem Boden (121), Seitenwänden (122) und einer Decke (123) sowie
eine in dem Gehäuse (12) angeordnete Wägevorrichtung (14) mit einem Wägegutträger (142), einem Wägesystem (141) und einem Wägesensor, wobei das Wägesystem (141) eine gehäusefeste Basis und einen mit dem Wägegutträger (142) verbundenen Lastaufnehmer aufweist, der einerseits über eine an der Basis angelenkte Lenkeranordnung vertikalbeweglich mit der Basis und andererseits über eine Hebelanordnung kraftübertragend mit dem basisfesten Wägesensor gekoppelt ist,
**dadurch gekennzeichnet,**
**dass** vom Zentrum des Bodens (121) des Gehäuses (12) eine vertikale Säule (124) auftragt, auf deren freiem Ende die Basis des Wägesystems (141) fixiert ist.

2. Waage (10) nach Anspruch 1,
**dadurch gekennzeichnet,**
**dass** der Boden (121) des Gehäuses (12) kreisscheibenförmig ausgebildet und ringförmig von den Seitenwänden (122) umstanden ist.

3. Waage (10) nach einem der vorangehenden Ansprüche,
**dadurch gekennzeichnet,**
**dass** der Boden (121) und die Seitenwände (122) des Gehäuses (12) materialeinheitlich einstückig ausgebildet sind.

4. Waage (10) nach einem der vorangehenden Ansprüche,
**dadurch gekennzeichnet,**
**dass** das freie Ende der Säule (125) eine deren Außenumfang überragende Trägerplatte (126) trägt, auf welcher die Basis des Wägesystems (141) fixiert ist.

5. Waage (10) nach einem der vorangehenden Ansprüche,
**dadurch gekennzeichnet,**
**dass** das Wägesystem (141) zumindest im Bereich des Lastaufnehmers über den Außenumfang der Säule (125) und - soweit vorhanden - über den Rand der Trägerplatte (126) übersteht und der als eine Pendelschale ausgebildete Wägegutträger (142) hängend unterhalb des Lastaufnehmers an diesem angelenkt ist.

6. Waage (10) nach Anspruch 5,
**dadurch gekennzeichnet,**
**dass** an der Säule (125) ein konzentrisch zu dieser angeordneter Drehteller mit einem Prüfgewichtsmagazin drehbeweglich gelagert ist.

7. Waage (10) nach einem der vorangehenden Ansprüche,
**dadurch gekennzeichnet,**
**dass** die Seitenwände (122) des Gehäuses (12) die Säule (125) nicht oder zumindest um weniger als die Höhe des Wägesystems (141) überragen und das Wägesystem (141) in eine korrespondierende Ausnehmung (127) der Decke (123) des Gehäuses (12) eingepasst ist.

8. Waage (10) nach einem der vorangehenden Ansprüche,
**dadurch gekennzeichnet,**
**dass** das Gehäuse (12) aus vorzugsweise dickwandigem Metall gefertigt ist und außen wie innen einen unlackierte, polierte Oberfläche aufweist.

## Claims

1. Balance (10), comprising
an evacuable housing (12) having a bottom (121), side walls (122), and a top (123), and
a weighing device (14) arranged in the housing (12) and having a load carrier (142), a weighing system (141) and a weighing sensor,
wherein the weighing system (141) has a base fixed to the housing and a load receptor connected to the load carrier (142), which load receptor is coupled vertically movably to the base via a link arrangement articulated to the base on the one hand and is coupled force-transmittingly to the weighing sensor fixed to the base via a lever arrangement on the other hand,
**characterized in that**
a vertical post (124) protrudes from the center of the bottom (121) of the housing (12), the base of the weighing system (141) being fixed on a free end of the post.

2. Balance (10) according to claim 1,
**characterized in that**
the bottom (121) of the housing (12) is shaped as a circular disk and is surrounded by the side walls (122) in an annular manner.

3. Balance (10) according to any one of the preceding claims,
**characterized in that**
the bottom (121) and the side walls (122) of the housing (12) are formed in one piece from a common material.

4. Balance (10) according to any one of the preceding claims,
**characterized in that**
the free end of the post (125) carries a platform (126) which projects beyond an outer circumference of the post and on which the base of the weighing system (141) is fixed.

5. Balance (10) according to any one of the preceding claims,
**characterized in that**
the weighing system (141), at least in the region of the load receptor, projects beyond the outer circumference of the post (125) and - if present - beyond the edge of the platform (126), and the load carrier (142), which is configured as a pendulum tray, is hinged to the load receptor in a suspended manner below the load receptor.

6. Balance (10) according to claim 5,
**characterized in that**
a turntable with a test weight magazine is concentrically and rotatably mounted to the post (125).

7. Balance (10) according to any one of the preceding claims,
**characterized in that**
the side walls (122) of the housing (12) do not or at most by less than the height of the weighing system (141) project beyond the post (125), and the weighing system (141) is fitted into a corresponding recess (127) in the top (123) of the housing (12).

8. Balance (10) according to any one of the preceding claims,
**characterized in that**
the housing (12) is made of preferably thick-walled metal and has an unpainted, polished surface on the outside as well as on the inside.

## Revendications

1. Balance (10), comprenant
un logement (12) dans lequel le vide peut être créé avec un fond (121), des parois latérales (122) et un plafond (123) ainsi que
un dispositif de pesée (14) disposé dans le logement (12) avec un support d'article à peser (142), un système de pesée (141) et un capteur de pesée,
dans laquelle le système de pesée (141) présente une base fixée au logement et un récepteur de charge relié au support d'article à peser (142), qui est couplé d'une part à la base de manière mobile verticalement par l'intermédiaire d'un ensemble de bielle articulé sur la base et d'autre part au capteur de pesée fixé à la base de manière à transmettre la force par l'intermédiaire d'un ensemble de levier,
**caractérisée en ce que**
une colonne verticale (124), sur l'extrémité libre de laquelle est fixée la base du système de pesée (141), s'applique à partir du centre du fond (121) du logement (12).

2. Balance (10) selon la revendication 1,
**caractérisée en ce que**
le fond (121) du logement (12) est réalisé en forme de disque circulaire et entouré annulairement par les parois latérales (122).

3. Balance (10) selon l'une quelconque des revendications précédentes,
**caractérisée en ce que**
le fond (121) et les parois latérales (122) du logement (12) sont réalisés d'une seule pièce dans le même matériau.

4. Balance (10) selon l'une quelconque des revendications précédentes,
**caractérisée en ce que**
l'extrémité libre de la colonne (125) porte une plaque de support (126) faisant saillie de la périphérie extérieure de celle-ci, sur laquelle est fixée la base du système de pesée (141) .

5. Balance (10) selon l'une quelconque des revendications précédentes,
**caractérisée en ce que**
le système de pesée (141) dépasse au moins dans la zone du récepteur de charge de la périphérie extérieure de la colonne (125) et - le cas échéant - du bord de la plaque de support (126) et le support d'article à peser (142) réalisé sous la forme d'une coque pendulaire est articulé en suspension au-dessous du récepteur de charge sur celui-ci.

6. Balance (10) selon la revendication 5,
**caractérisée en ce que**
sur la colonne (125) est monté mobile en rotation un plateau tournant disposé de manière concentrique par rapport à celle-ci avec un magasin de poids de contrôle.

7. Balance (10) selon l'une quelconque des revendications précédentes,
**caractérisée en ce que**
les parois latérales (122) du logement (12) ne font pas saillie de la colonne (125) ou n'en font saillie qu'au moins de moins de la hauteur du système de pesée (141) et le système de pesée (141) est encastré dans un évidement (127) correspondant du plafond (123) du logement (12).

8. Balance (10) selon l'une quelconque des revendications précédentes,
**caractérisée en ce que**
le logement (12) est fabriqué à partir d'un métal de préférence à parois épaisses et présente à l'extérieur comme à l'intérieur une surface polie non vernie.
